# EUROPEAN PATENT SPECIFICATION

(11) **EP 2 989 036 B1**
(45) Date of publication and mention of the grant of the patent: **06.11.2019**
(21) Application number: 14788774.9
(22) Date of filing: 25.04.2014
(51) Int. Cl.: B42C 19/02, B65H 31/02, B65H 43/00, B65H 45/18, B42B 4/00, G01B 5/06, G01B 7/06, B65H 31/30

(54) **BOOKLET MAKING MACHINE WITH THICKNESS SENSOR**
HEFTHERSTELLUNGSMASCHINE MIT DICKENSENSOR
MACHINE DE FABRICATION DE LIVRETS À CAPTEUR D'ÉPAISSEUR

(30) Priority: 26.04.2013 SE 1350516
(43) Date of publication of application: 02.03.2016
(73) Proprietor: Plockmatic International AB, 126 26 Hägersten (SE)
(72) Inventor: TILLMAN, Andreas, S-126 37 Hägersten (SE)
(74) Representative: AWA Sweden AB
(86) International application number: PCT/SE2014/050508
(87) International publication number: WO 2014/175822

(56) References cited:
- US-A- 3 298 605
- US-A- 5 464 201
- US-A- 6 086 522
- US-A1- 2003 227 129
- US-A1- 2004 172 842
- US-A1- 2004 188 911
- US-A1- 2008 224 379
- US-A1- 2009 066 001

## Description

### Technical field

The present invention relates to a booklet making machine with a stapling function for sheets forming the booklet and with a thickness sensor for determining the thickness of a stack of sheets to be stapled.

### Background art

Booklet making machines comprise a sheet transport system through which paper sheets, which are intended to form a booklet, are passed. The machine also comprises a stapling arrangement, which effects stapling of a set of sheets, and a folding arrangement, which effects folding of the previously stapled set of sheets. In some cases, the operation excludes the stapling function and the set of sheets is transported to the folding arrangement in an unstapled condition.

In order to provide accurate stapling, folding, trimming, and square folding, the thickness of the stack of paper sheets should be determined. This can be performed in different ways. One method is to count the number of sheets during feeding and multiply this number with a predetermined factor which depends on the kind of paper. Another method is to optically measure the thickness of the stack of paper sheets. However, an improved method and apparatus for measuring the thickness of a stack of paper sheets is desirable.

US 2009/0066001 A1 discloses a booklet making machine according to the preamble of claim 1.

US 3,298,605 A discloses a drive means imparting a reciprocating movement to a pin adapted to contact a stack of sheets.

### Summary of invention

An object of the present invention is to provide a booklet making machine with improved measuring of the thickness of a stack of paper sheets.

According to the invention, a booklet making machine is provided, comprising - a stapling arrangement adapted for stapling a stack of sheets following a paper path, a contacting device adapted to contact the stack of sheets, a drive means adapted to impart a reciprocating movement of the contacting device, and a sensor adapted to determine the distance of the movement of the contacting device.

With the booklet making machine according to the invention, the thickness of a stack of sheets can be accurately measured with a relatively simple mechanism. This mechanism has the further advantage that since air between the individual sheets is removed, the entire stack is made more compact, which facilitates feeding of further sheets to the stack.

In one embodiment, the drive means comprises a motor having a rotating shaft. This provides for a compact yet reliable arrangement.

In one embodiment, the drive means comprises a link plate, which is fixedly attached to the rotating shaft of the motor, wherein the contacting device is pivotably attached to the link plate. This provides a simple yet accurate arrangement for imparting a reciprocating movement to the contacting device, which is a pin. The pin is adapted to contact the stack of sheets. The sensor is adapted to determine the distance of the movement of the contacting device in the form of the pin, which pin is pivotably attached to the drive means.

In one embodiment, the rotation of the rotating shaft is transformed into an essentially linear reciprocating movement of the contacting means.

In one embodiment, the sensor, preferably a Hall Effect sensor, is provided on the rotating shaft of the motor. This provides a cost efficient arrangement with an accuracy that can be adapted to the requirements of the application.

In one embodiment, the sensor is adapted to provide a predetermined number of pulses for each full turn of the motor shaft. It is then preferred that the sensor is adapted to determine the distance of the movement of the contacting device with a resolution of 0.1 mm or higher.

### Brief description of drawings

The invention is now described, by way of example, with reference to the accompanying drawings, in which:
Fig. 1 is an overall sectional view of a booklet making machine according to the invention;
Fig. 2 is a detailed front view of a thickness sensor arrangement comprised in the booklet making machine of Fig. 1, and
Fig. 3 is a side view of the thickness sensor arrangement shown in Fig. 2.

### Detailed description of embodiments

In the following, a detailed description of embodiments of a booklet making machine according to the invention will be given.

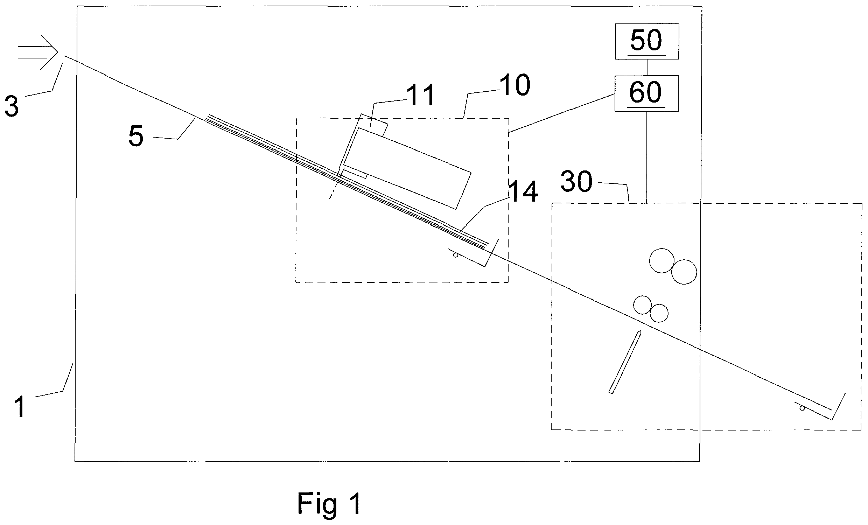

In Fig. 1, an overall sectional view of a booklet making machine, generally designated 1, is shown. In this figure, only the portions of the machine relevant for the present invention are shown, including a stapling arrangement, generally designated 10, and a folding arrangement, generally designated 30, which is optional. Paper sheets entering the booklet making machine 1 from for example a printer (not shown) enters through a sheet entry 3 and follows a paper sheet path 5. The sheets are directed along the paper sheet path 5 by means of rolls or the like (not shown) until they reach a staple stop of the stapling arrangement 10 comprising a stapler 11. Furthermore, the sheet path 5 is slanting so that sheets thereon are also forwarded by means of gravity force. After being subject to a stapling operation by means of the stapling arrangement 10, a set of sheets is forwarded to the folding arrangement 30 for folding.

The booklet making machine 1 also comprises an operating terminal 50 comprising a display and associated input means, such as buttons. By means of the operating terminal 50, which is connected to a control unit 60, such as a micro computer, an operator can input parameters relevant for the operation of the booklet making machine 1.

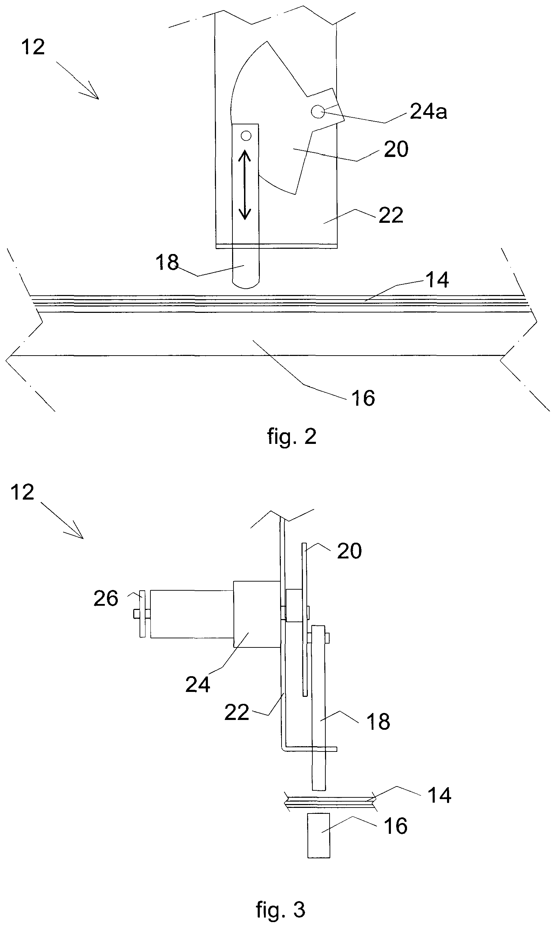

During operation, a number of sheets stack in the stapling arrangement so as to form a stack of sheets 14 to be stapled, see Fig. 2. After stacking, the stack of sheets 14 is stapled by means of the stapler 11, see Fig. 1.

In order to determine the thickness of the stack of sheets 14, a sensor arrangement, generally designated 12, is provided somewhere along the sheet path 5 and preferably at or in connection with the stapling arrangement 10.

Such a sensor arrangement for determining the thickness of the stack of sheets 14 will now be described in detail with reference to Figs. 2 and 3. In the figures, a stack of sheets 14 is provided on a stapling beam 16 or other surface along the sheet path 5. The sensor arrangement 12, which is provided above the stack of sheets 14 and the stapling beam 16, comprises a contacting device in the form of a pin 18, which is adapted to contact the stack of sheets 14. In this context, the term contacting device should be interpreted as any device which makes physical contact with or abuts the stack of sheets. The pin 18 is adapted to be imparted a reciprocating movement, indicated by a doubleheaded arrow in Fig. 2, by means of a drive means comprising a link plate 20, which is fixedly attached to the rotating shaft 24a of a motor 24. Thus, the pin 18 is pivotably attached to the link plate 20 and the rotation of the rotating shaft 24a is transformed into an essentially linear reciprocating movement of the pin 18.

The stapling beam 16 or other surface along the sheet path 5 is fixedly mounted in its position, this to represent a fixed reference surface for the contacting device 18.

A sensor 26 is provided on the rotating shaft 24a of the motor 24. By sensing the amount of rotation of the rotating shaft 24a, the distance of the movement of the contacting device in the form of pin 18 is determined. The sensor 26 can be any suitable sensor, such as a Hall Effect sensor with one or preferably two Hall elements. The sensor is adapted to provide a predetermined number of pulses for each full turn of the motor shaft 24a. In a preferred embodiment, the resolution of the sensor 26 is one seventh of a turn, i.e., for each full turn of the motor shaft 24a, seven pulses are emitted from the sensor 26. This corresponds to a resolution of the movement of the pin 18 of approximately 0.1 mm or higher. This can easily be upgraded by using the hall sensors on the sensor board giving four times better resolution, if required.

The sensor arrangement 12 operates as follows. The pin 18 is initially moved to an upper end position, which represents the greatest distance from the surface in the form of the stapling beam 16, and the sensor 26 is zeroed. The pin 18 is then moved downward by means of the motor 24 until it contacts or abuts the upper surface of the stapling beam 16 and the distance D_{full} moved by the pin from the upper end position thereof, i.e., the full swing of the pin, is then recorded. Subsequently, the pin 18 is returned to its upper end position.

After a first sheet of paper has been transported to a position between the stapling beam 16 and the sensor arrangement 12, the pin 18 is moved downward by means of the motor 24 until it contacts the upper surface of the sheet of paper. The distance D₁ moved by the pin from the upper end position thereof is recorded and stored. The difference between the full swing D_{full} and the distance D₁ moved between upper end position and the upper surface of one sheet of paper represents the thickness of one single sheet of paper. The pin 18 is then returned to its upper end position.

After a second sheet of paper has been transported to a position between the stapling beam 16 and the sensor arrangement 12, the pin 18 is moved downward by means of the motor 24 until it contacts the upper surface of the stack of sheets now consisting of two sheets of paper. The distance D₂ moved by the pin from the upper end position thereof is recorded and stored. The difference between the full swing D_{full} and the distance D₂ moved between upper end position and the upper surface of one sheet of paper represents the thickness of the stack of sheets 14 consisting of two sheets of paper. Also, the difference D₂ - D₁ between the distance moved with two sheets and one sheet, respectively, represents the thickness of the second sheet of paper. The pin 18 is then returned to its upper end position.

This procedure is repeated for each new sheet of paper added to the stack of sheets 14 and the thicknesses of the stack of sheets 14 consisting of three, four, five etc. sheets of paper are determined.

Preferred embodiments of a booklet making machine according to the invention have been described. It will be appreciated that these can be modified without departing from the scope of the invention which is solely defined by the appended claims. Thus, although a booklet making machine having both a stapling arrangement and a folding arrangement has been described, a booklet making machine having the adjustment function on only one of these arrangements is also possible. The inventive idea is also applicable to trimmers or square folders or any other device connected to a booklet maker or printer.

## Claims

1. A booklet making machine (1) comprising:
a stapling arrangement (10) adapted for stapling a stack of sheets (14) following a paper path (5),
a contacting device adapted to contact the stack of sheets (14),
a drive means (20, 24) adapted to impart a reciprocating movement of the contacting device,
**characterized in that**
the contacting device is a pin, which is adapted to contact the stack of sheets (14) and which is pivotably attached to the drive means (20, 24), and
wherein a sensor (26) is adapted to determine the distance of the movement of the (18) contacting device in the form of the pin

2. The booklet making machine (1) according to claim 1, wherein the drive means comprises a motor (24) having a rotating shaft (24a).

3. The booklet making machine (1) according to claim 2, wherein the drive means comprises a link plate (20), which is fixedly attached to the rotating shaft (24a) of the motor (24), wherein the contacting device (18) is pivotably attached to the link plate (20).

4. The booklet making machine (1) according to claim 2 or 3, wherein the rotation of the rotating shaft (24a) is transformed into an essentially linear reciprocating movement of the contacting means (18).

5. The booklet making machine (1) according to any one of claims 2-4, wherein the sensor (26) is provided on the rotating shaft (24a) of the motor (24).

6. The booklet making machine (1) according to any one of claims 1-4, wherein the sensor (26) is a Hall Effect sensor.

7. The booklet making machine (1) according to claim 5 or 6, wherein the sensor (26) is adapted to provide a predetermined number of pulses for each full turn of the motor shaft (24a).

8. The booklet making machine (1) according to any one of claims 1-7, wherein the sensor (26) is adapted to determine the distance of the movement of the contacting device with a resolution of 0.1 mm or higher.

## Patentansprüche

1. Broschürenherstellungsmaschine (1) umfassend:
eine Heftanordnung (10), die zum Heften eines Stapels von Blättern (14) entlang eines Papierwegs (5) geeignet ist,
eine Kontaktvorrichtung, die zum Kontaktieren des Stapels von Blättern (14) geeignet ist,
ein Antriebsmittel (20, 24), das zum Übermitteln einer hin- und hergehenden Bewegung der Kontaktvorrichtung geeignet ist,
**dadurch gekennzeichnet, dass**
die Kontaktvorrichtung ein Stift ist, der zum Kontaktieren des Stapels von Blättern (14) geeignet ist und der schwenkbar an dem Antriebsmittel (20, 24) befestigt ist, und
wobei ein Sensor (26) zum Bestimmen der Entfernung der Bewegung der Kontaktvorrichtung in Form des Stiftes (18) geeignet ist.

2. Broschürenherstellungsmaschine (1) nach Anspruch 1, wobei das Antriebsmittel einen Motor (24) mit einer rotierenden Welle (24a) umfasst.

3. Broschürenherstellungsmaschine (1) nach Anspruch 2, wobei das Antriebsmittel eine Lasche (20) umfasst, die fest mit der rotierenden Welle (24a) des Motors (24) verbunden ist, wobei die Kontaktvorrichtung (18) schwenkbar mit der Lasche (20) verbunden ist.

4. Broschürenherstellungsmaschine (1) nach Anspruch 2 oder 3, wobei die Drehung der rotierenden Welle (24a) in eine im Wesentlichen lineare Hin- und Herbewegung des Kontaktmittels (18) umgewandelt wird.

5. Broschürenherstellungsmaschine (1) nach einem der Ansprüche 2-4, wobei der Sensor (26) auf der rotierenden Welle (24a) des Motors (24) vorgesehen ist.

6. Broschürenherstellungsmaschine (1) nach einem der Ansprüche 1-4, wobei der Sensor (26) ein Hall-Effekt-Sensor ist.

7. Broschürenherstellungsmaschine (1) nach Anspruch 5 oder 6, wobei der Sensor (26) angepasst ist, um eine vorbestimmte Anzahl von Impulsen für jede volle Drehung der Motorwelle (24a) bereitzustellen.

8. Broschürenherstellungsmaschine (1) nach einem der Ansprüche 1-7, wobei der Sensor (26) angepasst ist, um den Abstand der Bewegung der Kontaktvorrichtung mit einer Auflösung von 0,1 mm oder höher zu bestimmen.

## Revendications

1. Machine de fabrication de livrets (1) comprenant :
un système d'agrafage (10) adapté pour agrafer une pile de feuilles (14) suivant un trajet de papier (5),
un dispositif de contact adapté pour venir au contact de la pile de feuilles (14),
un moyen d'entraînement (20, 24) adapté pour permettre un mouvement de va-et-vient du dispositif de contact,
**caractérisée en ce que**
le dispositif de contact est une broche adaptée pour venir au contact de la pile de feuilles (14) et fixée de façon pivotante au moyen d'entraînement (20, 24), et
dans laquelle un capteur (26) est adapté pour déterminer la distance de déplacement du dispositif de contact sous forme de broche (18).

2. Machine de fabrication de livrets (1) selon la revendication 1, dans laquelle le moyen d'entraînement comprend un moteur (24) comportant un arbre rotatif (24a).

3. Machine de fabrication de livrets (1) selon la revendication 2, dans laquelle le moyen d'entraînement comprend une plaque de liaison (20) fixement reliée à l'arbre rotatif (24a) du moteur (24), dans laquelle le dispositif de contact (18) est fixé de façon pivotante à la plaque de liaison (20).

4. Machine de fabrication de livrets (1) selon la revendication 2 ou 3, dans laquelle la rotation de l'arbre rotatif (24a) est transformée en un mouvement de va-et-vient essentiellement linéaire du moyen de contact (18).

5. Machine de fabrication de livrets (1) selon l'une quelconque des revendications 2 à 4, dans laquelle le capteur (26) est disposé sur l'arbre rotatif (24a) du moteur (24).

6. Machine de fabrication de livrets (1) selon l'une quelconque des revendications 1 à 4, dans laquelle le capteur (26) est un capteur à effet hall.

7. Machine de fabrication de livrets (1) selon la revendication 5 ou 6, dans laquelle le capteur (26) est adapté pour fournir un nombre prédéterminé d'impulsions pour chaque tour complet de l'arbre de moteur (24a).

8. Machine de fabrication de livrets (1) selon l'une quelconque des revendications 1 à 7, dans laquelle le capteur (26) est adapté pour déterminer la distance du déplacement du dispositif de contact avec une résolution de 0,1 mm ou plus.
